# FASCICULE DE BREVET EUROPEEN

(11) **EP 1 371 287 B1**
(45) Date de publication et mention de la délivrance du brevet: **24.01.2007**
(21) Numéro de dépôt: 03291384.0
(22) Date de dépôt: 11.06.2003
(51) Int. Cl.: A01M 7/00

(54) **Pulvérisateur agricole perfectionné**
Landwirtschaftliche Feldspritze
Agricultural sprayer

(30) Priorité: 12.06.2002 FR 0207210
(43) Date de publication de la demande: 17.12.2003
(73) Titulaire: EXEL INDUSTRIES, 51200 Epernay (FR)
(72) Inventeur: Ballu, Patrick, 51100 Reims (FR)
(74) Mandataire: Colas, Jean-Pierre

(56) Documents cités:
- EP-A- 0 437 804
- FR-A- 2 759 544

## Description

La présente invention est relative à un pulvérisateur agricole destiné à épandre des produits phytosanitaires sur de la végétation.

Par le document FR 2 759 544, on connaît un tel pulvérisateur comprenant
- un châssis destiné à être solidaire d'un véhicule transporteur,
- une ossature montée réglable verticalement par rapport audit châssis et s'étendant dans un plan transversal à la direction de progression dudit véhicule, ossature sur laquelle est fixée une rampe de pulvérisation,
- des moyens de connexion s'étendant longitudinalement dans ladite direction de progression, pour relier entre eux ledit châssis et ladite ossature, ces moyens de connexion définissant sur ledit châssis deux premiers axes d'articulation superposés et sur ladite ossature deux seconds axes superposés, tous ces axes étant horizontaux, parallèles et orientés transversalement à ladite direction de progression,
- lesdits moyens de connexion comprenant
- un ensemble inférieur de connexion articulé sur ledit châssis et ladite ossature autour des axes respectifs inférieurs parmi lesdits premiers et seconds axes, et
- un ensemble supérieur de connexion articulé sur ledit châssis et ladite ossature autour des axes respectifs supérieurs parmi lesdits premiers et seconds axes,
- au moins une cuve destinée à contenir un liquide utile au travail de pulvérisation et placée sur ledit châssis, et
- un moyen moteur pour permettre le réglage en hauteur de ladite rampe de pulvérisation.

Comme cela est classique, ce pulvérisateur connu comprend une rampe repliable afin qu'il puisse se déplacer sur route. La grande dimension de la cuve destinée à contenir la bouillie à pulvériser est essentiellement orientée longitudinalement. Les moyens de connexion entre le châssis et l'ossature sont prévus latéralement de part et d'autre de cette cuve, ce qui empêche toute extension latérale de celle-ci au-delà de ces moyens de connexion.

Par conséquent, pour pouvoir équiper le pulvérisateur d'une cuve ayant une contenance importante, on doit allonger sa dimension longitudinale et donc placer loin vers l'arrière par rapport au châssis, l'ossature portant la rampe, ce qui augmente le porte-à-faux par rapport au véhicule porteur et influe défavorablement sur l'équilibre sur route de l'attelage. Cela est particulièrement gênant, lorsqu'il s'agit d'un pulvérisateur monté directement sur un tracteur agricole (pulvérisateur dit "porté").

L'invention a pour but de fournir un pulvérisateur agricole du type défini en préambule, dont le porte-à-faux arrière est réduit au minimum et qui évite ainsi tout risque de déséquilibre lors des déplacements sur route, tout en permettant de donner à la cuve une contenance importante.

L'invention a donc pour objet un tel pulvérisateur qui est caractérisé en ce que
ledit ensemble inférieur de connexion est une poutre centrale dimensionnée pour supporter le poids de la rampe et de l'ossature, et la ou les cuve(s) sont conformée(s) de manière à être traversée(s) par ladite poutre,
et en ce que
ledit ensemble supérieur de connexion comprend au moins une tringle qui n'est dimensionnée que pour maintenir ladite ossature et ledit châssis dans des positions relatives fixes en dehors des phases de réglage en hauteur de la rampe, ledit ensemble supérieur étant pour l'essentiel situé au-dessus de la ou des cuve(s) dans toutes les positions possibles de ladite ossature.

Grâce à ces caractéristiques, le volume délimité entre le châssis et l'ossature est dégagé latéralement de chaque côté du pulvérisateur de sorte que la ou les cuve(s) peu(ven)t s'étendre latéralement de part et d'autre des moyens de connexion. Ainsi, il est possible de prévoir la grande dimension, en particulier de la cuve principale contenant la bouillie, non plus longitudinalement, mais transversalement par rapport à la direction de progression du pulvérisateur. Cette dimension peut alors être choisie suffisante pour assurer une grande contenance de cette cuve, tout en évitant un porte-à-faux important.

En outre, du fait que la poutre centrale supporte le poids de l'ossature et de la rampe, l'ensemble de connexion supérieure peut être réalisé avec des pièces de construction légère et simplifiée.

Enfin, la poutre peut être montée pivotante sur le châssis autour d'un axe qui se trouve situé très près, du "troisième point" supérieur de suspension du pulvérisateur sur le tracteur voire être directement connectée à ce troisième point. De la sorte, on obtient une répartition aussi favorable que possible du poids du pulvérisateur par rapport au tracteur et la stabilité de l'ensemble en est améliorée, surtout s'il se trouve en déplacement sur route ou pendant le travail dans les champs.

Selon d'autres particularités avantageuses de l'invention:
- ledit ensemble supérieur de connexion comprend deux tringles parallèles espacées horizontalement et articulées respectivement sur ledit châssis et ladite ossature;
- lesdites tringles parallèles sont cintrées, leur concavité étant dirigée vers le bas; l'une de leurs branches courant le long de la surface supérieure de la ou desdites cuve(s) et l'autre branche s'étendant vers le bas le long de la surface arrière de la ou desdites cuve(s);
- ledit ensemble supérieur de connexion comprend une tringle unique s'étendant dans un plan longitudinal vertical du pulvérisateur, en étant articulée par ses extrémités respectivement sur ledit châssis et ladite ossature;
- l'articulation de ladite tringle unique sur ledit châssis est prévue au sommet d'une structure triangulaire prolongeant ledit châssis vers le haut;
- ladite tringle unique présente la forme d'une fourche avec une partie centrale articulée sur ledit châssis et se prolongeant en direction de ladite ossature par deux branches s'évasant l'une par rapport à l'autre et dont les extrémités libres sont articulées sur ladite ossature;
- ladite tringle unique présente la forme d'une fourche avec une partie centrale articulée sur ladite ossature et se prolongeant en direction dudit châssis par deux branches s'évasant l'une par rapport à l'autre et dont les extrémités libres sont articulées sur ledit châssis;
- ladite poutre est une poutre-caisson;
- ladite poutre présente approximativement la forme d'un I dont les branches sont articulées respectivement sur ledit châssis et sur ladite ossature;
- ledit moyen moteur est un vérin, de préférence hydraulique, articulée par une extrémité sur ledit châssis et par l'autre extrémité sur ladite poutre;
- la partie centrale de ladite poutre présente une ouverture à travers laquelle s'étend ledit vérin, celui-ci étant articulé sur cette poutre à une face de celle-ci et articulé sur ledit châssis en un point qui est situé en regard de l'autre face de la poutre;
ladite cuve présente une ouverture centrale à travers laquelle s'étend ladite poutre, ladite ouverture étant dimensionnée pour permettre le débattement de celle-ci lors du réglage en hauteur de ladite ossature;
ladite cuve est celle destinée à contenir la bouillie phytosanitaire;
ladite cuve présente la forme d'un U inversé et est disposée transversalement sur ledit châssis en chevauchant ladite poutre centrale, et il est prévu des moyens pour mettre en communication les parties latérales de ladite cuve;
il comporte une première cuve ayant la forme générale d'une équerre placée transversalement sur ledit châssis, une première des branches de l'équerre reposant sur ledit châssis et l'autre branche s'y appuyant par l'intermédiaire d'une deuxième cuve distante de la première branche pour permettre le passage de ladite poutre;
il comporte au moins trois cuves placées côte à côte transversalement sur ledit châssis, les cuves extérieures étant en communication l'une avec l'autre et la troisième cuve étant surélevée par rapport au châssis pour laisser le passage à ladite poutre;
il comprend une première cuve présentant la forme d'un U, placée debout sur ledit châssis en ne formant qu'un seul volume, une deuxième cuve étant éventuellement insérée entre les branches du U de cette première cuve, tout en laissant passage à ladite poutre.
lesdites première, deuxième et/ou troisième cuves sont solidaires l'une de l'autre par conjugaison de formes par exemple du type tenon et mortaise.

D'autres caractéristiques et avantages de la présente invention apparaîtront au cours de la description qui va suivre, donnée uniquement à titre d'exemple et faite en se référant aux dessins annexés sur lesquels:
- la figure 1 est une représentation schématique partielle en perspective, vu de l'arrière par rapport à la direction de progression normale, d'un pulvérisateur selon l'invention, ici à titre d'exemple du type porté;
- la figure 2 est une représentation du pulvérisateur, analogue à celle de la figure 1, cependant que la cuve n'est pas dessinée;
- la figure 3 est une vue latérale schématique d'un pulvérisateur de type porté selon l'invention, suspendu à un tracteur, l'ossature de la rampe étant représentée dans ses deux positions extrêmes haute et basse;
- les figures 4 à 7 montrent des vues schématiques en perspective de plusieurs variantes possibles du pulvérisateur selon l'invention;et
- les figures 8 à 12 montrent plusieurs agencements possibles de la cuve ou des cuves du pulvérisateur.

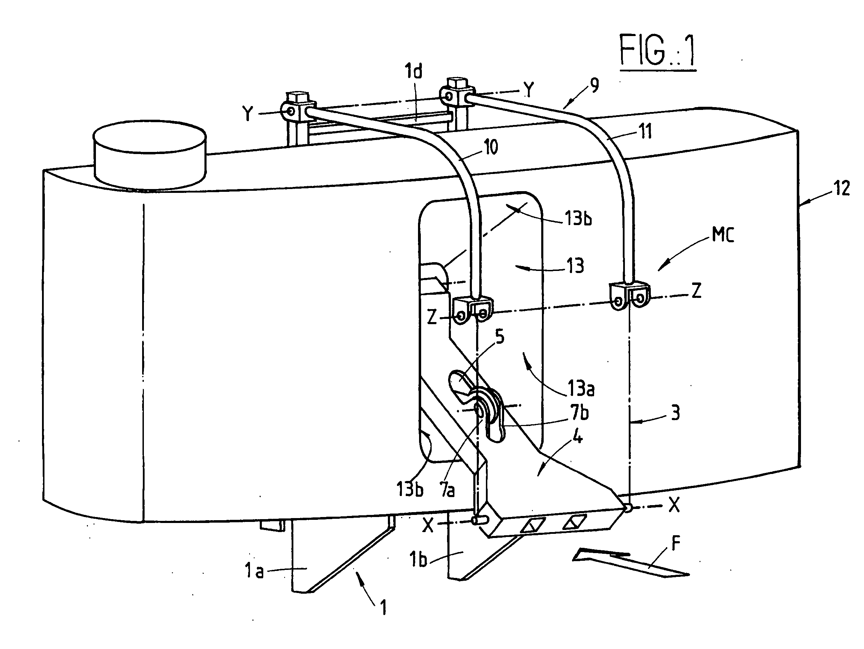

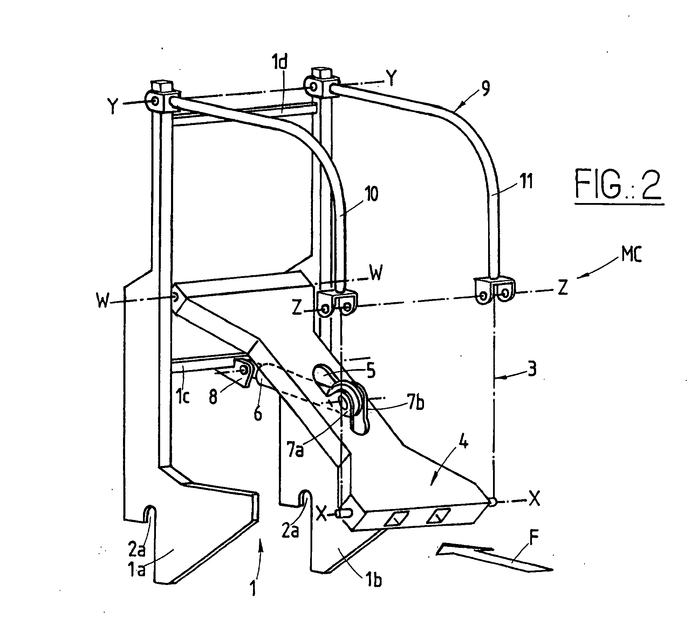

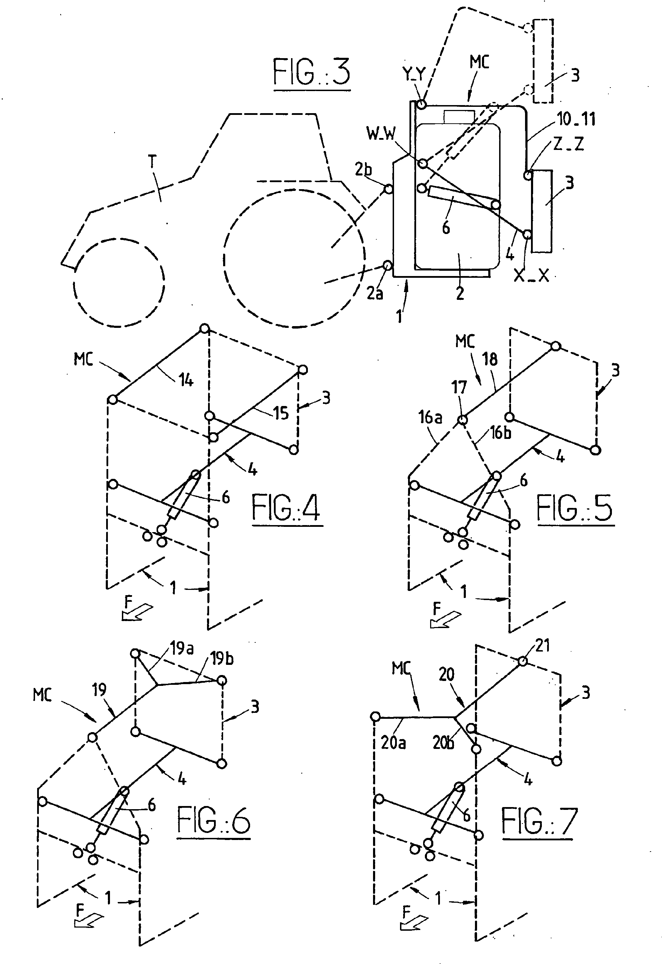

Dans le mode de réalisation préféré représenté aux figures 1 et 2, le pulvérisateur selon l'invention comprend un châssis 1 qui, dans cet exemple, est adapté pour être accroché sur les trois points d'attelage habituels d'un tracteur utilisé comme véhicule porteur. Sur les figures 2 et 3, on voit qu'à cet effet, le châssis 1 comprend notamment deux crochets inférieurs 2a, un crochet supérieur 2b étant également prévu, mais seulement visible sur la vue latérale schématique de la figure 3.

Il convient de noter qu'une structure selon l'invention peut également être utilisée sur des pulvérisateurs tractés ou auto-portés, le châssis 1 faisant alors partie intégrante de l'ensemble du véhicule.

Dans l'exemple représenté, le châssis 1 est composé de deux éléments 1a, 1b de profil essentiellement en forme d'un "L", dont les montants sont convenablement entretoisés, par exemple par les barres 1c et 1d.

Le pulvérisateur comprend également une ossature 3 qui n'est représentée que schématiquement en traits mixtes sur l'ensemble des figures, sauf sur la figure 3 où elle est symbolisée par un rectangle en traits pleins. De façon connue en soi, cette ossature 3 supporte une rampe de pulvérisation (non représentée). Cette rampe est déployable transversalement pour assurer le travail de pulvérisation dans le champ et repliable pour le transport sur route par exemple, le long des flancs de l'attelage tracteur-pulvérisateur, vers le haut ou encore vers l'arrière selon la conception générale du pulvérisateur..

Le châssis 1 et l'ossature 3 sont reliés entre eux par des moyens de connexion désignés par la référence générique MC. Ces moyens de connexion s'étendent généralement longitudinalement par rapport à la direction de progression du pulvérisateur, cette direction étant désignée sur les figures par la flèche F. Ils sont destinés à supporter l'ossature 3 par rapport au châssis 1, tout en autorisant le réglage en hauteur de celle-ci. A cet effet, ils définissent sur le châssis 1 deux axes d'articulation Y-Y et W-W, superposés, horizontaux et s'étendant transversalement par rapport à la direction F. De même, ils définissent sur l'ossature 3 deux axes d'articulation X-X et Z-Z, également superposés, horizontaux et s'étendant transversalement par rapport à la direction F.

Les moyens de connexion MC comprennent un ensemble inférieur de connexion qui, selon une caractéristique avantageuse de l'invention, est formé par une poutre 4 articulée à l'avant sur le châssis 1 autour de l'axe W-W et à l'arrière sur l'ossature 3 autour de l'axe X-X.

De préférence, la poutre 4 est formée par un caisson creux revêtant grosso modo la forme d'un "I" couché. Dans l'exemple représenté; ce caisson présente en son centre une ouverture 5 à travers laquelle s'étend un vérin de relevage/abaissement 6, ce dernier étant pivoté d'une part entre deux flasques 7a et 7b dressées respectivement de part et d'autre de l'ouverture 5 sur la face supérieure de la poutre 4 et d'autre part dans un étrier 8 prévu sur la barre 1c du châssis 1, ce point d'articulation étant donc situé en regard de la face inférieure de la poutre 4.

Le vérin 6 est un exemple parmi d'autres d'un moyen moteur permettant le réglage en hauteur de l'ossature 3.

Les moyens de connexion MC comprennent également un ensemble supérieur de connexion formé par un embiellage 9 qui, dans le présent mode de réalisation, est constitué par deux tringles cintrées 10 et 11, articulées sur le châssis 1 autour de l'axe Y-Y et sur l'ossature 3 autour de l'axe Z-Z. Dans le mode de réalisation représenté, la concavité des tringles cintrées 10 et 11 est dirigée vers la bas.

Dans le mode de réalisation représenté sur les figures 1 à 3, les branches horizontales des éléments de châssis 1a et 1b forment des assises pour une cuve 12 qui dans ce cas est celle destinée à contenir la bouillie de produit phytosanitaire à épandre, les autres cuves, comme la cuve de rinçage par exemple, n'étant pas représentées. Toutefois, on verra dans la suite de la description que la cuve 12 peut également être soit compartimentée pour contenir également un liquide de rinçage soit être associée par construction à d'autres cuves, telle que la cuve de rinçage ou un réservoir d'eau claire pour un lave-main, par exemple. Toutes les cuves peuvent être fabriquées par rotomoulage, ce qui permet de leur donner toute forme adaptée à celle des parties constructives du pulvérisateur.

Une caractéristique intéressante de l'invention illustrée dans le cadre de l'exemple des figures 1 à 3, notamment, consiste en ce que, en raison de l'agencement des moyens de connexion MC, la cuve 12, tout en présentant une forme générale de parallélépipède rectangle, peut être disposée sur le châssis 1 de telle sorte que sa grande dimension soit orientée transversalement par rapport à l'ensemble du pulvérisateur, la cuve dépassant donc latéralement l'envergure transversale du châssis 1 et de l'ossature 3. Ceci a pour conséquence que la cuve 12 peut présenter une contenance appréciable sans reporter le centre de gravité vers l'arrière, diminuant ainsi le porte-à-faux d'un attelage portant le pulvérisateur. Ceci contribue à augmenter considérablement la stabilité en déplacement du pulvérisateur, surtout dans le cas où la cuve est pleine, augmentation qui se fait sentir favorablement si le pulvérisateur est exécuté sous sa forme portée. On notera également que la forme des tringles cintrées 10 et 11 dégage de la place nécessaire pour la cuve ainsi disposée. La figure 3 illustre en outre que la poutre 4 est articulée au châssis 1 à proximité immédiate du troisième point d'attelage 2b du tracteur porteur T.

Dans le mode de réalisation des figures 1 à 3, la poutre 4 traverse un passage 13 ménagé d'avant en arrière au milieu de la cuve 12. Ce passage présente en haut et en bas des parois inclinées 13 qui s'évasent l'une par rapport à l'autre considéré dans le sens avant-arrière. Ainsi, la poutre 4 peut se débattre librement de haut en bas sous l'action du vérin 6, malgré la présence du corps de la cuve 12.

Pour illustrer l'avantage important obtenu par l'invention, la figure 3 montre schématiquement l'attelage d'un tracteur T et d'un pulvérisateur porté conçu selon l'invention. La même figure montre comment par la commande du vérin 6, les moyens de connexion MC se déforment. L'ossature 3 et avec elle la rampe qui y est montée, peuvent donc être manoeuvrées entre une position basse représentée en traits continus et une position haute, représentée en traits pointillés.

La poutre 4 peut avantageusement être dimensionnée de telle façon qu'elle soit capable à elle seule de prendre en charge le poids de l'ossature 3 et de la rampe qui y est montée. De ce fait, l'ensemble supérieur de connexion formé dans le présent exemple par les tringles cintrées 10 et 11, peut être dimensionné très légèrement, c'est à dire seulement pour maintenir la position relative de l'ossature 3 par rapport au châssis 1. Ces tringles ne sont donc destinées à éviter en quelque sorte que le basculement de l'ossature 3 autour de l'axe X-X.

Les figures 4 à 7 représentent des variantes de construction du pulvérisateur qui vient d'être décrit. Ces variantes permettent toutes de construire convenablement les moyens de connexion MC selon l'invention, tout en préservant la possibilité de disposer la cuve 12 comme représenté sur la figure 1.

Ainsi, sur la figure 4, les tringles cintrées 10 et 11 sont remplacées par des tringles droites 14 et 15 articulées respectivement sur les extrémités supérieures des éléments de châssis 1a et 1b.

Sur la figure 5, le châssis 1 est prolongé verticalement vers le haut par deux barres obliques 16a et 16b qui se rejoignent en un seul point d'articulation 17. Dans ce cas, l'ensemble de connexion supérieure n'est formé que par une seule tringle 18 disposée dans un plan vertical longitudinal du châssis 1 et remplaçant les tringles cintrées 10 et 11 du pulvérisateur du mode de réalisation des figures 1 et 2.

Alors que dans la variante de la figure 5, la tringle 18 est rectiligne, celle 19 de la variante de la figure 6 est fourchue tout en étant articulée de la même façon au châssis 1. En revanche, du côté arrière, les branches 19a et 19b de la tringle 19 sont articulées respectivement dans les angles supérieurs de l'ossature 3.

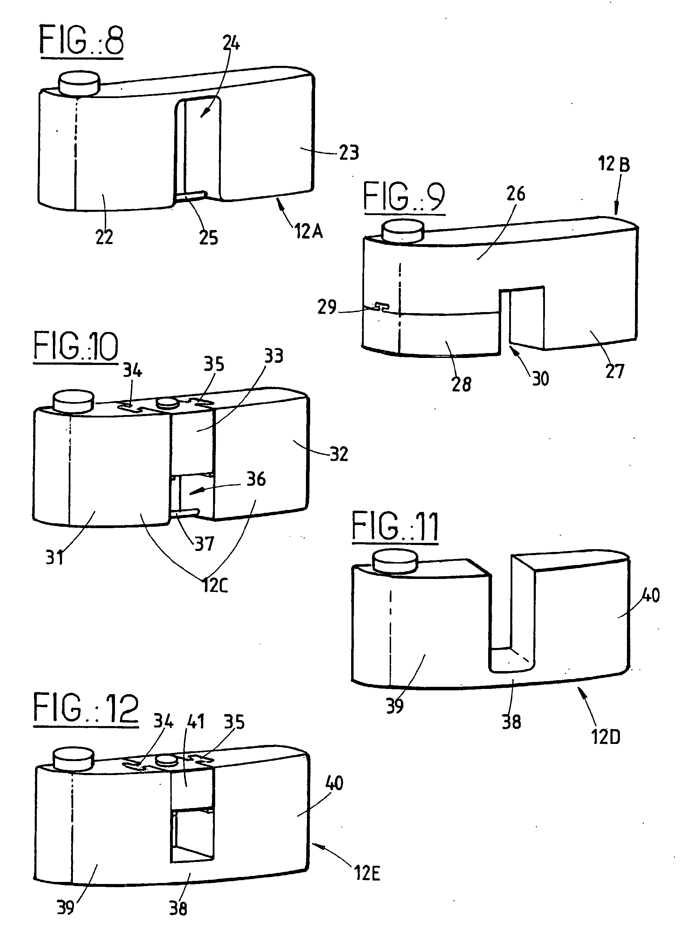

On retrouve une telle tringle fourchue 20 dans la variante de la figure 7, cependant que ses branches 20a et 20b sont articulées sur les éléments de châssis 1a et 1b comme dans la variante de la figure 4. L'extrémité arrière de la tringle 20 est articulée sur l'ossature 3 par une seule articulation 21.

Il va de soi que toutes ces variantes sont aptes à recevoir une cuve 12 disposée transversalement et traversée par la poutre 4, celle-ci n'ayant été qu'ébauchée dans les dessins des figures 4 à 7.

Sur la figure 8, on voit que l'on peut prévoir une cuve 12A ayant grosso mode la forme d'un U inversé qui vient se placer à cheval sur le volume 24 dans lequel doit se débattre la poutre 4. Les deux compartiments latéraux 22 et 23 de cette cuve communiquent entre eux à la base de la cuve 12A par l'intermédiaire d'un tube 25 facilitant ainsi le vidage complet de celle-ci.

Sur la figure 9, on a représenté un autre exemple de réalisation dans laquelle la cuve principale 12B présente grosse modo la forme d'une équerre placée transversalement sur le châssis 1. Un compartiment supérieur 26 formant l'une des branches de l'équerre s'étend transversalement sur toute la largeur de l'ensemble, tandis qu'un compartiment 27 inférieur formant l'autre branche constitue avec le compartiment supérieur 26 un seul volume pour la bouillie phytosanitaire. Ce compartiment 27 ne s'étend que sur une largeur nettement inférieure à la moitié du compartiment supérieur 26. Du côté opposé, il est prévu une deuxième cuve 28 symétrique du compartiment 27, mais séparée de la cuve 12B dont elle est solidaire par conjugaison de formes (par exemple du type tenon et mortaise) obtenue par le processus de rotomoulage comme indiqué à titre d'exemple en 29. Cette cuve secondaire 28 peut servir pour contenir le liquide de rinçage par exemple. Entre le compartiment 27 et la cuve 28 est ménagé un volume 30 pour permettre le passage et le débattement de la poutre 4.

Dans la variante de la figure 10, la cuve principale 12C comporte également deux compartiment 31 et 32 disposés de part et d'autre d'une cuve secondaire 33 qui en est rendue solidaire par conjugaison de formes (également du type tenon et mortaise par exemple) comme indiqué en 34 et 35. Cette cuve peut servir de cuve d'eau de rinçage par exemple. La hauteur de la cuve secondaire 33 est inférieure à celle des compartiments 31 et 32 de la cuve principale 12C de sorte qu'elle est surélevée par rapport au châssis 1 en ménageant un volume 36 pour permettre le passage et le débattement de la poutre 4. Un tube de communication 37 est ici également prévu à la base des compartiments 31 et 32.

Dans la variante de la figure 11, on prévoit une cuve principale 12D en forme de U, placée debout sur le châssis 1. Cette cuve ne présente qu'un seul volume, un compartiment de communication 38 étant prévu à sa base entre deux compartiments latéraux 39 et 40.

Dans la variante de la figure 12, on prévoit une cuve 12E de même forme que celle de la figure 11, cependant que dans ce cas, une cuve secondaire 41 est montée entre les deux compartiments latéraux 39 et 40 à l'image de la cuve 33 de la variante de la figure 10, tout en laissant passage à la poutre 4.

## Revendications

1. Pulvérisateur comprenant
- un châssis (1) destiné à être solidaire d'un véhicule transporteur (T),
- une ossature montée (3) réglable verticalement par rapport audit châssis (1) et s'étendant dans un plan transversal à la direction de progression (F) dudit véhicule, ossature (3) sur laquelle est fixée une rampe de pulvérisation,
- des moyens de connexion (MC) s'étendant longitudinalement dans ladite direction de progression (F), pour relier entre eux ledit châssis (1) et ladite ossature (3), ces moyens de connexion définissant sur ledit châssis (1) deux premiers axes d'articulation superposés (Y-Y, W-W) et sur ladite ossature (3) deux seconds axes superposés (X-X, Z-Z), tous ces axes étant horizontaux, parallèles et orientés transversalement à ladite direction de progression (F),
- lesdits moyens de connexion (MC) comprenant
- un ensemble inférieur de connexion (4) articulé sur ledit châssis et ladite ossature autour des axes respectifs (X-X, W-W) inférieurs parmi lesdits premiers et seconds axes, et
- un ensemble supérieur de connexion (9, 10; 14, 15; 18; 19; 20) articulé sur ledit châssis (1) et ladite ossature (3) autour des axes respectifs supérieurs (Y-Y; Z-Z) parmi lesdits premiers et seconds axes,
- au moins une cuve (12 à 12E, 28, 33, 41) destinée à contenir un liquide utile au travail de pulvérisation, et placée sur ledit châssis (1), et
un moyen moteur (6) pour permettre le réglage en hauteur de ladite rampe de pulvérisation,
**caractérisé en ce que**
ledit ensemble inférieur de connexion est une poutre centrale (4) dimensionnée pour supporter le poids de la rampe et de l'ossature (3), et la ou lesdites cuve(s) (12 à 12E, 28, 33, 41) sont conformée(s) de manière à être traversée(s) par ladite poutre (4),
et **en ce que**
ledit ensemble supérieur de connexion comprend au moins une tringle (10, 11; 14, 15; 18; 19; 20) qui n'est dimensionnée que pour maintenir ladite ossature et ledit châssis dans des positions relatives fixes en dehors des phases de réglage en hauteur de la rampe, ledit ensemble supérieur étant pour l'essentiel situé au-dessus de la ou desdites cuve(s) (12 à 12E, 28, 33, 41) dans toutes les positions possibles de ladite ossature.

2. Pulvérisateur selon la revendication 1, **caractérisé en ce que** ledit ensemble supérieur de connexion comprend deux tringles parallèles (10, 11) espacées horizontalement et articulées respectivement sur ledit châssis (1) et ladite ossature (3).

3. Pulvérisateur selon la revendication 2, **caractérisé en ce que** lesdites tringles parallèles (10, 11) sont cintrées, leur concavité étant dirigée vers le bas; l'une de leurs branches courant le long de la surface supérieure de la ou desdites cuve(s) (12 à 12E, 28, 33, 41) et l'autre branche s'étendant vers le bas le long de la surface arrière de la ou desdites cuve(s).

4. Pulvérisateur selon la revendication 1, **caractérisé en ce que** ledit ensemble supérieur de connexion comprend une tringle unique (18; 19; 20) s'étendant dans un plan longitudinal vertical du pulvérisateur, en étant articulée par ses extrémités respectivement sur ledit châssis (1) et ladite ossature (3).

5. Pulvérisateur selon la revendication 4, **caractérisé en ce que** l'articulation (17) de ladite tringle unique (18) sur ledit châssis est prévue au sommet d'une structure triangulaire (16a, 16b) prolongeant ledit châssis (1) vers le haut.

6. Pulvérisateur selon la revendication 5, **caractérisé en ce que** ladite tringle unique (19) présente une forme de fourche avec une partie centrale articulée sur ledit châssis et se prolongeant en direction de ladite ossature par deux branches (19a, 19b) s'évasant l'une par rapport à l'autre et dont les extrémités libres sont articulées sur ladite ossature (3).

7. Pulvérisateur selon la revendication 4, **caractérisé en ce que** ladite tringle unique (20) présente une forme fourchue avec une partie centrale articulée sur ladite ossature (3) et se prolongeant en direction dudit châssis par deux branches (20a, 20b) s'évasant l'une par rapport à l'autre et dont les extrémités libres sont articulées sur ledit châssis (1).

8. Pulvérisateur selon l'une quelconque des revendications 1 à 7, **caractérisé en ce que** ladite poutre (4) est une poutre-caisson.

9. Pulvérisateur selon la revendication 8, **caractérisé en ce que** ladite poutre présente approximativement la forme d'un I dont les branches sont articulées respectivement sur ledit châssis (1) et sur ladite ossature (3).

10. Pulvérisateur selon l'une quelconque des revendications 1 à 9, **caractérisé en ce que** ledit moyen moteur est un vérin (6), de préférence hydraulique, articulée par une extrémité sur ledit châssis (1) et par l'autre extrémité sur ladite poutre (4).

11. Pulvérisateur selon les revendications 8 à 10 prises ensemble, **caractérisé en ce que** la partie centrale de ladite poutre (4) présente une ouverture (5) à travers laquelle s'étend ledit vérin (6), celui-ci étant articulé sur cette poutre à une face de celle-ci et articulé sur ledit châssis (1) en un point (8) qui est situé en regard de l'autre face de la poutre (4).

12. Pulvérisateur selon l'une quelconque des revendications 1 à 11, **caractérisé en ce que** ladite cuve (12) présente une ouverture centrale (13) à travers laquelle s'étend ladite poutre (4), ladite ouverture (13) étant dimensionnée pour permettre le débattement de celle-ci lors du réglage en hauteur de ladite ossature.

13. Pulvérisateur selon l'une quelconque des revendications 1 à 12, **caractérisé en ce que** ladite cuve (12) est celle destinée à contenir la bouillie phytosanitaire.

14. Pulvérisateur selon l'une quelconque des revendications 1 à 13, **caractérisé en ce que** ladite cuve (12A) présente la forme d'un U inversée et est disposé transversalement sur ledit châssis (1) en chevauchant ladite poutre centrale (4), et il est prévu des moyens (25) pour mettre en communication les parties latérales (22, 23) de ladite cuve (12A).

15. Pulvérisateur selon l'une quelconque des revendications 1 à 13, **caractérisé en ce qu**'il comporte une première cuve (12B) ayant la forme générale d'une équerre placée transversalement sur ledit châssis (1), une première (27) des branches de l'équerre reposant sur ledit châssis (1) et l'autre branche (26) s'y appuyant par l'intermédiaire d'une deuxième cuve (28) distante de la première branche pour permettre le passage de ladite poutre(4).

16. Pulvérisateur selon l'une quelconque des revendications 1 à 13, **caractérisé en ce qu**'il comporte au moins trois cuves (31, 32, 33) placées côte à côte transversalement sur ledit châssis (1), les cuves extérieures (31, 32) étant en communication l'une avec l'autre et la troisième cuve (33) étant surélevée par rapport au châssis pour laisser passage à ladite poutre (4).

17. Pulvérisateur selon l'une quelconque des revendications 1 à 13, **caractérisé en ce qu**'il comprend une première cuve (12D, 12E) présentant la forme d'un U, placée debout sur ledit châssis en ne formant qu'un seul volume.

18. Pulvérisateur selon la revendication 17, **caractérisé en ce qu'**une deuxième cuve (41) est insérée entre les branches du U de ladite première cuve (12E), tout en laissant passage à ladite poutre.

19. Pulvérisateur suivant l'une quelconque des revendications 14 à 16 et 18, **caractérisé en ce que** lesdites première, deuxième et/ou troisième cuves (12B, 12C, 12E, 31, 32, 33, 41) sont solidaires l'une de l'autre par conjugaison de formes par exemple du type tenon et mortaise (29; 34, 35).

## Claims

1. Sprayer comprising
- a chassis (1) intended to be attached to a transporter vehicle (T),
- a frame (3) mounted on said chassis (1), adjustable vertically relative thereto and extending in a plane transverse to the direction (F) of forward movement of said vehicle, to which frame (3) a spray manifold is fixed,
- connecting means (MC) extending longitudinally in said direction (F) of forward movement to connect together said chassis (1) and said frame (3), these connecting means defining two superposed first articulation axes (Y-Y, W-W) on said chassis (1) and two superposed second axes (X-X, Z-Z) on said frame (3), all these axes being horizontal, parallel and oriented transversely to said direction (F) of forward movement,
- said connecting means (MC) comprising
- a lower connecting assembly (4) articulated to said chassis and said frame about respective lower axes (X-X, W-W) of said first and second axes, and
- an upper connecting assembly (9, 10; 14, 15; 18; 19; 20) articulated to said chassis (1) and said frame (3) about respective upper axes (Y-Y; Z-Z) of said first and second axes,
- at least one tank (12 to 12E, 28, 33, 41) adapted to contain a liquid usable for spraying and placed on said chassis (1),
and
driving means (6) for adjusting the height of said sprayer manifold,
**characterized in that**
said lower connecting assembly is a central beam (4) dimensioned to support the weight of the manifold and the frame (3) and said tank(s) (12 to 12E, 28, 33, 41) is or are conformed to have said beam (4) pass through it or them,
and **in that**
said upper connecting assembly comprises at least one link (10, 11; 14, 15; 18; 19; 20) that is dimensioned only to hold said frame and said chassis in fixed relative positions outside phases of adjusting the height of the manifold, said upper assembly being for the most part situated above said tank(s) (12 to 12E, 28, 33, 41) in all possible positions of said frame.

2. Sprayer according to claim 1, **characterized in that** said upper connecting assembly comprises two parallel links (10, 11) spaced horizontally and articulated to said chassis (1) and said frame (3), respectively.

3. Sprayer according to claim 2, **characterized in that** said parallel links (10, 11) are curved, their concave side facing downwards, one of their branches running along the upper surface of said tank(s) (12 to 12E, 28, 33, 41) and the other branch extending downwardly along the rear surface of said tank(s).

4. Sprayer according to claim 1, **characterized in that** said upper connecting assembly comprises a single link (18; 19; 20) extending in a longitudinal vertical plane of the sprayer and articulated at its ends to said chassis (1) and said frame (3), respectively.

5. Sprayer according to claim 4, **characterized in that** the articulation (17) of said single link (18) to said chassis is at the top of a triangular structure (16a, 16b) extending said chassis (1) upwardly.

6. Sprayer according to claim 5, **characterized in that** said single link (19) is forked with a central portion articulated to said chassis and extended in the direction of said frame by two branches (19a, 19b) diverging relative to each other and the free ends whereof are articulated to said frame (3).

7. Sprayer according to claim 4, **characterized in that** said single link (20) is forked with a central portion articulated to said frame (3) and extended in the direction of said chassis by two branches (20a, 20b) diverging relative to each other and the free ends whereof are articulated to said chassis (1).

8. Sprayer according to any one of claims 1 to 7, **characterized in that** said beam (4) is a box section beam.

9. Sprayer according to claim 8, **characterized in that** said beam has approximately the shape of an I the branches whereof are articulated to said chassis (1) and to said frame (3), respectively.

10. Sprayer according to any one of claims 1 to 9, **characterized in that** said driving means is a jack (6), preferably hydraulic, articulated at one end to said chassis (1) and at the other end to said beam (4).

11. Sprayer according to claims 8 to 10 taken together, **characterized in that** the central portion of said beam (4) has an opening (5) through which said jack (6) extends, the latter being articulated to one face of said beam and articulated to said chassis (1) at a point (8) that faces the other face of the beam (4).

12. Sprayer according to any one of claims 1 to 11, **characterized in that** said tank (12) has a central opening (13) through which said beam (4) extends, said opening (13) being dimensioned to allow the movement of the beam when adjusting the height of said frame.

13. Sprayer according to any one of claims 1 to 12, **characterized in that** said tank (12) is that intended to contain the phytosanitary mixture.

14. Sprayer according to any one of claims 1 to 13, **characterized in that** said tank (12A) has the shape of an inverted U and is disposed transversely on said chassis (1), straddling said central beam (4), and means (25) are provided for establishing communication between the lateral portions (22, 23) of said tank (12A).

15. Sprayer according to any one of claims 1 to 13, **characterized in that** it includes a first tank (12B) having the general shape of a set square placed transversely on said chassis (1), a first branch (27) of the set square resting on said chassis (1) and the other branch (26) bearing thereon through the intermediary of a second tank (28) at a distance from the first branch to allow the passage of said beam (4).

16. Sprayer according to any one of claims 1 to 13, **characterized in that** it includes at least three tanks (31, 32, 33) placed transversely side-by-side on said chassis (1), the outer tanks (31, 32) being in communication with each other and the third tank (33) being raised relative to the chassis to provide a passage for said beam (4).

17. Sprayer according to any one of claims 1 to 13, **characterized in that** it comprises a first tank (12D, 12E) having the shape of a U placed upright on said chassis and forming only a single volume.

18. Sprayer according to claim 17, **characterized in that** a second tank (41) is inserted between the branches of the U of said first tank (12E), providing a passage for said beam.

19. Sprayer according to any one of claims 14 to 16 and 18, **characterized in that** said first, second and/or third tanks (12B, 12C, 12E, 31, 32, 33, 41) are fastened to each other by interlocking shapes, for example of mortise and tenon type (29; 34, 35).

## Patentansprüche

1. Sprühvorrichtung, umfassend
• Ein Gestell (1), das dazu bestimmt ist, mit einem Transportfahrzeug (T) zusammen zu hängen,
• ein Tragwerk (3), das in Bezug auf das Gestell (1) senkrecht verstellbar angebracht ist und sich in einer Ebene quer zu der Fahrtrichtung (F) des Fahrzeugs erstreckt, wobei auf dem Tragwerk (3) ein Sprühverteiler befestigt ist,
• Verbindungsmittel (MC), die sich der Länge nach in der Fahrtrichtung (F) erstrecken, um das Gestell (1) und das Tragwerk (3) miteinander zu verbinden, wobei diese Verbindungsmittel auf dem Gestell (1) zwei erste übereinander liegende Anlenkachsen (Y-Y, W-W) und auf dem Tragwerk (3) zwei zweite übereinander liegende Anlenkachsen (X-X, Z-Z) definieren und wobei alle diese Achsen horizontal, parallel und quer zu der Fahrtrichtung (F) gerichtet sind.
• wobei die Verbindungsmittel (MC) enthalten
• eine untere Verbindungsgruppe (4), angelenkt an dem Gestell und dem Tragwerk um die jeweiligen unteren Achsen (X-X, W-W) unter den ersten und zweiten Achsen, und
• eine obere Verbindungsgruppe (9, 10; 14, 15; 18; 19; 20), angelenkt an dem Gestell (1) und dem Tragwerk (3) um die jeweiligen oberen Achsen (Y-Y; Z-Z) unter den ersten und zweiten Achsen
• mindestens einen Bottich (12 bis 12E, 28, 33, 41), dazu bestimmt, eine bei der Sprüharbeit verwendbare Flüssigkeit zu enthalten und angeordnet auf dem Gestell (1), und
• ein Bewegungsmittel (6), um die Höhenverstellung des Sprühverteilers zu ermöglichen,
**dadurch gekennzeichnet, dass**
die untere Verbindungsgruppe ein zentraler Träger (4), dimensioniert zum Tragen des Gewichtes des Verteilers und des Tragwerks (3) ist, und der oder die Bottich(e) (12 bis 12E, 28, 33, 41) in Übereinstimmung damit gebracht sind, von dem Träger (4) durchquert zu werden,
und **dadurch**, dass
die obere Verbindungsgruppe mindestens eine Stange (10, 11; 14, 15; 18; 19; 20) umfasst, die nur dazu dimensioniert ist, das Tragwerk und das Gestell außerhalb der Phasen der Höhenverstellung des Verteilers in zueinander ortsfesten Positionen zu halten, wobei sich die obere Gruppe in allen möglichen Stellungen des Tragwerks im Wesentlichen oberhalb des/der Bottichs/Bottiche (12 bis 12E, 28, 33, 41) befindet.

2. Sprühvorrichtung gemäß Anspruch 1, **dadurch gekennzeichnet, dass** die obere Verbindungsgruppe zwei parallele Stangen (10, 11) umfasst, die horizontal beabstandet sind und jeweils an dem Gestell (1) und dem Tragwerk (3) angelenkt sind.

3. Sprühvorrichtung gemäß Anspruch 2, **dadurch gekennzeichnet, dass** die parallelen Stangen (10, 11) gekrümmt sind, wobei ihre Konkavität nach unten gerichtet ist; der eine ihrer Schenkel entlang der oberen Oberfläche des oder der Bottichs/Bottiche (12 bis 12E, 28, 33, 41) verläuft und der andere Schenkel sich entlang der hinteren Oberfläche des oder der Bottichs/Bottiche nach unten erstreckt.

4. Sprühvorrichtung gemäß Anspruch 1, **dadurch gekennzeichnet, dass** die obere Verbindungsgruppe eine einzige Stange (18; 19; 20) umfasst, die sich in einer senkrechten Längsebene der Sprühvorrichtung erstreckt, indem sie mit ihren Enden an dem Gestell (1) beziehungsweise dem Tragwerk (3) angelenkt ist.

5. Sprühvorrichtung gemäß Anspruch 4, **dadurch gekennzeichnet, dass** die Anlenkung (17) der einzigen Stange (18) an dem Gestell an dem Scheitelpunkt einer das Gestell (1) nach oben verlängernden dreieckigen Struktur (16a, 16b) vorgesehen ist.

6. Sprühvorrichtung gemäß Anspruch 5, **dadurch gekennzeichnet, dass** die einzige Stange (19) die Form einer Gabel aufweist, die einen mittleren, an dem Gestell angelenkten Teil hat und die sich in Richtung des Tragwerks mit zwei auseinander laufenden Schenkeln (19a, 19b) verlängert, deren freien Enden an dem Tragwerk (3) angelenkt sind.

7. Sprühvorrichtung gemäß Anspruch 4, **dadurch gekennzeichnet, dass** die einzige Stange (20) die Form einer Gabel aufweist, die einen mittleren, an dem Tragwerk (3) angelenkten Teil hat und die sich in Richtung des Gestells mit zwei auseinander laufenden Schenkeln (20a, 20b) verlängert, deren freien Enden an dem Gestell (1) angelenkt sind.

8. Sprühvorrichtung gemäß irgendeinem der Ansprüche 1 bis 7, **dadurch gekennzeichnet, dass** der Träger (4) ein Blechträger mit Kastenquerschnitt ist.

9. Sprühvorrichtung gemäß Anspruch 8, **dadurch gekennzeichnet, dass** der Träger annähernd die Form eines I aufweist, dessen Schenkel an dem Gestell (1) beziehungsweise dem Tragwerk (3) angelenkt sind.

10. Sprühvorrichtung gemäß irgendeinem der Ansprüche 1 bis 9, **dadurch gekennzeichnet, dass** das Bewegungsmittel ein vorzugsweise hydraulischer Zylinder ist, der mit einem Ende an dem Gestell (1) und mit dem anderen Ende an dem Träger (4) angelenkt ist.

11. Sprühvorrichtung gemäß den Ansprüchen 8 bis 10 zugleich, **dadurch gekennzeichnet, dass** der mittlere Teil des Trägers (4) eine Öffnung (5) aufweist, durch die hindurch sich der Zylinder (6) erstreckt, wobei dieser an diesem Träger an einer Kante davon angelenkt ist und an dem Gestell (1) an einem Punkt (8) angelenkt ist, der sich gegenüber der anderen Kante des Trägers (4) befindet.

12. Sprühvorrichtung gemäß irgendeinem der Ansprüche 1 bis 11, **dadurch gekennzeichnet, dass** der Bottich (12) eine zentrale Öffnung (13) aufweist, durch die hindurch sich der Träger (4) erstreckt, wobei die Öffnung (13) so dimensioniert ist, dass sie dessen Auslenkung bei der Höhenverstellung des Tragwerks ermöglicht.

13. Sprühvorrichtung gemäß irgendeinem der Ansprüche 1 bis 12, **dadurch gekennzeichnet, dass** der Bottich (12) derjenige ist, der dazu bestimmt ist, die Pflanzenschutzmittelbrühe zu enthalten.

14. Sprühvorrichtung gemäß irgendeinem der Ansprüche 1 bis 13, **dadurch gekennzeichnet, dass** der Bottich (12A) die Form von einem umgekehrten U aufweist und quer auf dem Gestell (1) angeordnet ist, indem er den zentralen Träger (4) übergreift, und er mit Mitteln (25) versehen ist, um die seitlichen Teile (22, 23) des Bottichs (12A) in Verbindung zu setzen.

15. Sprühvorrichtung gemäß irgendeinem der Ansprüche 1 bis 13, **dadurch gekennzeichnet, dass** sie einen ersten Bottich (12B) umfasst, der die allgemeine Form eines quer auf dem Gestell (1) angeordneten Bügels aufweist, wobei ein erster (27) der Schenkel des Bügels auf dem Gestell (1) ruht und der andere Schenkel (26) sich mittels eines zweiten Bottichs (28) darauf abstützt , welcher von dem ersten Schenkel entfernt ist, um den Durchgang des Trägers (4) zu ermöglichen.

16. Sprühvorrichtung gemäß irgendeinem der Ansprüche 1 bis 13, **dadurch gekennzeichnet, dass** sie mindestens drei Bottiche (31, 32, 33) umfasst, die Seite an Seite quer auf dem Gestell (1) angeordnet sind, wobei die äußeren Bottiche (31, 32) miteinander in Verbindung stehen und der dritte Bottich (33) in Bezug auf das Gestell hochgezogen ist, um den Durchgang des Trägers (4) zu ermöglichen.

17. Sprühvorrichtung gemäß irgendeinem der Ansprüche 1 bis 13, **dadurch gekennzeichnet, dass** sie einen ersten, die Form eines U aufweisenden Bottich (12D, 12E) umfasst, der aufrecht auf dem Gestell angeordnet ist, wobei er nur ein einziges Volumen bildet.

18. Sprühvorrichtung gemäß Anspruch 17, **dadurch gekennzeichnet, dass** ein zweiter Bottich (41) zwischen den U-Schenkeln des ersten Bottichs (12E) eingefügt ist, wobei trotzdem dem Träger Durchgang gelassen wird.

19. Sprühvorrichtung gemäß irgendeinem der Ansprüche 14 bis 16 und 18, **dadurch gekennzeichnet, dass** die ersten, zweiten und/oder dritten Bottiche (12B, 12C, 12E, 31, 32, 33, 41) durch Ineinandergreifen von Formen miteinander zusammen hängen, zum Beispiel nach Art von Feder und Nut (29; 34, 35).
